(19) Europäisches Patentamt
European Patent Office
Office européen des brevets

(11) EP 2 354 177 A1

(12) # EUROPÄISCHE PATENTANMELDUNG

(43) Veröffentlichungstag:
**10.08.2011 Patentblatt 2011/32**

(51) Int Cl.:
***C08J 3/00*** *(2006.01)* ***C08G 65/00*** *(2006.01)*

(21) Anmeldenummer: **10197246.1**

(22) Anmeldetag: **29.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **03.02.2010 DE 102010001528**

(71) Anmelder: **Evonik Goldschmidt GmbH
45127 Essen (DE)**

(72) Erfinder:
- **Schubert, Frank
47506, Neukirchen-Vluyn (DE)**
- **Naumann, Matthias
Greensboro, NC 27407 (US)**
- **Knott, Wilfried
45355, Essen (DE)**
- **Venzmer, Joachim
45239, Essen (DE)**
- **de Gans, Berend-Jan
45478, Mülheim an der Ruhr (DE)**
- **Wiechers, Susann
45276, Essen (DE)**

(54) **Partikel und Kompositpartikel, deren Verwendungen und ein Verfahren zu deren Herstellung aus Alkoxysilylgruppen tragenden Alkoxylierungsprodukten**

(57) Neue Partikel und Kompositpartikel, deren Verwendungen und ein neues Verfahren zu deren Herstellung aus Alkoxysilylgruppen tragenden Alkoxylierungsprodukten.

EP 2 354 177 A1

## Beschreibung

Gegenstand der Erfindung sind neue Partikel und Kompositpartikel, deren Anwendungen sowie Verfahren zu deren Herstellung aus Alkoxysilylgruppen tragenden Alkoxylierungsprodukten.

Unter Partikel oder zusammengesetzten Partikeln (Kompositpartikel) werden im Rahmen dieser Erfindung in Luft oder Flüssigkeiten dispergierte feste, zumeist kleinteilige Stoffe und Zusammensetzungen verstanden. Kleinteilig bedeutet dabei, dass die Partikel kleiner gleich 1 cm in allen drei Dimensionen sind und bevorzugt 100 nm bis 2 mm groß sind. Wichtige Unterscheidungsmerkmale von Partikeln sind:

Größe, Form, Masse, Dichte, ggf. Porenvolumen und
Porengröße und deren Verteilungen, sowie elektr. u.
magnet. Eigenschaften. Die hier beschriebenen Partikel können kompakt gefüllt oder mit Hohlräumen durchsetzt sein, die ggf. mit weiteren Komponenten wie beispielsweise Gase, Luft, Flüssigkeiten, weiteren Feststoffen oder Polymeren teilweise oder gänzlich gefüllt sein können. Die Befüllung kann auch aus Mischungen der genannten Komponenten bestehen. Bei beladenen oder gefüllten Partikeln sind alle Morphologien möglich, vom Schwamm (Matrix) bis hin zu Core-Shell-Partikeln (Hülle-Schale-Partikel).

Partikel und Kompositpartikel auf Basis von vernetzbaren Polyethern sind in der Literatur nahezu unbekannt. Lediglich JP 11-255889 beschreibt die Herstellung von sphärischen Partikeln aus linearem, mit Methyldimethoxysilylgruppen-terminiertem Polypropylenoxid.

Pulverförmige Siliconverbindungen dagegen finden bereits breite Verwendung als Zusatzstoffe in Kosmetika und Toilettenartikeln, z.B. als Mattierungsmittel, als Absorber für Hautfette oder zur Erzeugung eines seidigen Hautgefühls, als Additive zur Verbesserung der mechanischen Eigenschaften von Polymeren und Lacken oder Beschichtungen, z.B. zur Erhöhung der Abrieb- oder Kratzfestigkeit und auch der Schlagzähigkeit, weiterhin als Antiblockmittel zur Verbesserung der Gleiteigenschaften verschiedenster Oberflächen, als Fließ- oder Dispergierhilfsmittel in Pulvern, als Additive in Tonern sowie als mildes Abrasivum in Wasch-und Pflegeformulierungen.

Zur Herstellung solcher Partikel sind mehrere Methoden bekannt. Prinzipiell können nicht-sphäroid geformte Siliconelastomerpartikel durch Vermahlungsprozesse der jeweiligen Bulk-Elastomere gewonnen werden, jedoch bieten sphäroide oder kugelförmige Partikel in der Regel anwendungstechnische Vorteile, vor allem, wenn eine ansprechende (seidige, weiche, geschmeidige) Haptik der partikeladditivierten Materialien und Formulierungen gewünscht wird. Üblicherweise werden solche Partikel durch Vernetzungsreaktionen innerhalb von Edukt-Tröpfchen oder Aufwachsen/Aufbringung eines Polymers auf einen Partikelkern hergestellt. Vernetzungsreaktionen können dabei Hydrosilylierungsreaktionen, Kondensationsreaktionen, dehydrogenative Kopplungsreaktionen oder auch radikalische Polymerisationen sein.

Siliconpartikel aus Hydrosilylierungen werden beispielsweise in US 4,761,454, JP 2003301047 und EP 1 074 575 beschrieben, Hydrolyse- und Kondensationsreaktionen zur Herstellung von Siliconpartikeln finden sich in EP 1 130 046, WO 2006/016968, JP 2003002973, US 6,753,399, EP 0 765 896 sowie EP 0 744 432, während US 2004/0156808 eine dehydrogenative Kopplungsreaktion zu diesem Zweck beschreibt. Schließlich werden in DE 10 2004 053 314 über radikalische Polymerisationen erhältliche Copolymere beschrieben. In jedem der hier erwähnten Schriften ist der Startpunkt für die Partikelherstellung die Emulgierung der entsprechenden Monomeren.

Die Miniemulsionspolymerisation von Siliconacrylaten ist literaturbekannt ("Polydimethyl siloxane latexes and copolymers by polymerization and polyaddition in miniemulsion", Katharina Landfester, Ute Pawelzik, Markus Antonietti, Polymer, 46 (2005), 9892-9898).

In der noch nicht offengelegten Schrift DE 10 2009 022630.3 werden stabile, wässrige Emulsionen aus den Alkoxysilylgruppen tragenden Alkoxylierungsprodukten, insbesondere solchen Verbindungen der Formel (1) beschrieben.

Wässrige Emulsionen werden in der Regel mit Hilfe von molekularen Emulgatoren stabilisiert. Diese Moleküle lagern sich an der Öl/Wasser-Grenzfläche an und verhindern dadurch Koaleszenz der Tropfen und/oder Ostwaldreifung, durch welches die Emulsion sich letztendlich in eine makroskopische Öl- und Wasserphase auftrennen würde. Alternativ dazu können Emulsionen durch die Adsorption von Festkörpern stabilisiert werden. Festkörperstabilisierte, wässrige Emulsionen wurden 1907 von S. U. Pickering beschrieben ("Emulsions", Spencer Umfreville Pickering, Journal of the Chemical Society, Transactions (1907), 91, 2001-2021) und gelten als besonders stabil gegenüber Koaleszenz. So beschreibt DE 10 2004 014 704 beispielsweise die Herstellung von Emulsionen, die mit pyrogen erzeugten Partikeln stabilisiert sind. Eine gute Übersicht über die Eigenschaften solcher stabilisierender Feststoffpartikel findet sich in "Particles as surfactants - similarities and differences" von Bernhard P. Binks (Current opinion in colloid & interface science, 7 (2002), 21-41). Zum Stand der Technik gehören auch sogenannte "Janus-Partikel", amphiphile Partikel mit hemisphärisch modifizierter Oberfläche, wie z. B. in FR 2 808 704 beschrieben. Besonders gut geeignet zur Emulsionsstabilisierung sind nanoskalige, vorwiegend anorganische Partikel, z. B. Silica-Partikel, welche als "LUDOX®" in Form wässriger Sole

bzw. Dispersionen von der Fa. Grace Davison im Handel erhältlich sind. In US 3,615,972 (1967) wird erstmals die Verwendung von LUDOX®-Partikeln zur Emulsionsstabilisierung von Methylmethacrylat mit nachfolgender Polymerisation beschrieben. DE 10 2007 058 713 beschreibt die Herstellung von Silicon(meth)acrylat-Partikeln in mit LUDOX®-Partikeln stabilisierten Emulsionen. Als Mechanismus der stabilisierenden Wirkung wird in der Literatur die Agglomeration der Partikel und die Anreicherung der Agglomerate an der Wasser/Öl-Grenzfläche diskutiert ("The mechanism of emulsion stabilization by small silica (LUDOX®) particles", Helen Hassander, Beatrice Johansson, Bertil Törnell, Colloids and Surfaces, 40, (1989), 93-105).

Ein Nachteil der gemäß dem Stand der Technik hergestellten Partikel besteht darin, dass polydimethylsiloxanähnliche Partikeloberflächen nur schwer modifizierbar sind. Dies ist aber oftmals gewünscht, um die Partikel an die verschiedenen technischen Erfordernisse anpassen zu können, d.h. beispielsweise ihre Anbindung an diverse Matrices zu ermöglichen oder Einarbeitbarkeit in Formulierungen zu erleichtern bzw. erst möglich zu machen.

Diese Nachteile können teilweise durch Komposit-Partikel überwunden werden. Als Komposit-Partikel werden hier sowohl Kern-Hülle-Partikel als auch schwammartig aufgebaute Partikel inklusive aller zwischen diesen Definitionsgrenzen liegenden Strukturtypen, sowie Partikel, in die zusätzliche Feststoffe eingelagert sind, bezeichnet.

Beispielsweise beschreibt US 4,946,893 (EP 0 319 828) die Herstellung mit anorganischen Partikeln gefüllter Siliconpartikel über eine Hydrosilylierungsreaktion in wässriger Phase und US 5,176,960 beschreibt die Herstellung hochgefüllter mechanisch belastbarer Siliconpartikel über Mischen eines hydrophobierten SiO2 mit einem Diorganopolysiloxan und anschließender Härtung durch Sprühtrocknung. Dahingegen erlauben Kern-Hülle-Partikel ggf. gezielte Modifizierungen von Oberflächeneigenschaften, die Einfluss auf die gewünschten anwendungstechnischen Eigenschaften haben.

Je nach Herstellungsverfahren und Verwendung der Kern-Hülle-Partikel kann ihre Korngröße im Nanometer- oder Mikrometer-Bereich liegen. Kern-Hülle-Partikel sind beispielsweise herstellbar nach literaturbekannten Verfahren, so beschreibt die EP 0 661 334 mit einem Organopolysilsesquioxan-Harz oberflächenbeschichtete Siliconpartikel und deren Herstellung, US 2006/0084758 beschreibt die Herstellung von mit kleineren Siliconpartikeln oberflächenmodifizierte Siliconpartikel, und mit SiO2 aus wässriger Phase nachträglich beschichtete Siliconpartikel finden sich in EP 0 079 322, EP 5 487 624 und EP 0 516 057. Weiterhin beschreibt EP 0 079 322 mit SiO2 unter Zuhilfenahme einer öligen Phase oberflächenbeschichteter Siliconpartikel. Kern-Schale-Partikel mit Siliconpolymer-Kern und Organopolymer-Hülle werden beschrieben in DE 10 2004 047 708 und DE 10 2004 022 406 (Verwendung in wässrigen Lacken EP 0 8 82 105, in Pulverlacken EP 0 852 610).

Weiterhin gibt es zahlreiche Schriften, die sich auf Kern-Hülle-Strukturen mit anorganischem Kern und Siliconhülle beziehen, z. B. EP 0 8 2 2 232 und EP 0 433 727.

Die vorliegende Erfindung beschreibt im Gegensatz zum zitierten Stand der Technik die Herstellung von Partikeln basierend auf oder sogar ausschließlich bestehend aus Alkoxysilylgruppentragenden Alkoxylierungsprodukten, insbesondere im Bereich größer 1 µm und kleiner 2 mm.

Aufgabe der vorliegenden Erfindung ist die Bereitstellung von Partikeln und Kompositpartikel auf Basis von Alkoxysilylgruppen tragenden Alkoxylierungsprodukten, und ein dazu geeignetes Herstellverfahren.

Diese Aufgabe wird gelöst durch Kondensation zur Erzeugung von Partikeln und/oder Kompositpartikeln von Alkoxysilylgruppen tragenden Alkoxylierungsprodukten mit einer Molmasse von größer oder gleich 300 g/mol, insbesondere Verbindungen der Formel (1). Die Verbindungen der Formel (1) können auch als Silylpolyether bezeichnet werden.

Bevorzugt weisen die Alkoxysilylgruppen tragenden Alkoxylierungsprodukte zudem mindestens eine Hydroxylgruppe auf.

Die Herstellung erfolgt durch Kondensation einer emulgierten organischen Phase, enthaltend mindestens ein Alkoxysilylgruppen tragendes Alkoxylierungsprodukt, in einer wässrigen, optional festkörperstabilisierten Phase und vorzugsweise mittels eines über die wässrige Phase zugegebenen Katalysators.

Als Alkoxysilylgruppen tragende Alkoxylierungsprodukte, insbesondere solche Verbindungen der Formel (1) (Silylpolyether), die im Sinne dieser Erfindung Verwendung finden, werden alle Reaktionsprodukte verstanden, die durch Alkoxylierung von epoxyfunktionellen Silanen an Doppelmetallcyanid-Katalysatoren gemäß dem in der noch nicht vorveröffentlichten Schrift DE 10 2009 022630.3 beschriebenen Verfahren hergestellt werden können; insbesondere können diese Verbindungen auch Siloxangruppen tragen. Diese Produkte werden im Weiteren als Verbindungen der Formel (1) bezeichnet. Der Inhalt der Beschreibung und der Ansprüche der DE 10 2009 022630.3 ist hiermit vollumfänglich als Bestandteil dieser Offenbarung anzusehen.

Eine Silylgruppe im Rahmen dieser Erfindung ist dadurch gekennzeichnet, dass sie neben mindestens einer Alkoxyfunktion ein oder zwei Alkylfunktionen oder ein oder zwei weitere Alkoxyfunktionen an einem Siliziumatom aufweist, wobei die in den Resten vorhandenen organischen oder oxyorganischen Gruppen gleich oder verschieden sein können.

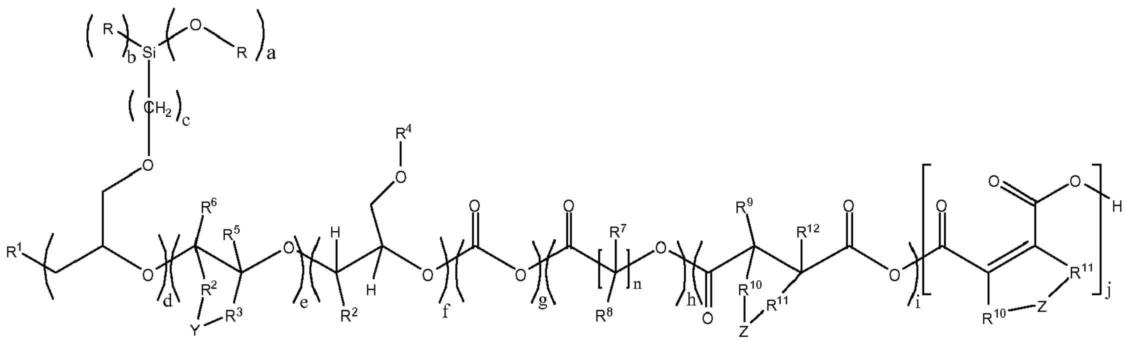

Formel (1) - Silylpolyether 1 - siehe auch Fig. 1
wobei

- a eine ganze Zahl von 1 bis 3, vorzugsweise 3 ist,
- b eine ganze Zahl von 0 bis 2, vorzugsweise 0 bis 1, besonders bevorzugt 0 ist, und die Summe von a und b gleich 3 ist,
- c eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist,
- d eine Zahl von 1 bis 500 ist, bevorzugt 1 bis 100, besonders bevorzugt größer 1, ganz besonders bevorzugt 2 bis 20 und insbesondere bevorzugt 2 bis 10,

| | |
|---|---|
| e | eine ganze Zahl von 0 bis 10.000, bevorzugt 1 bis 2000, besonders bevorzugt 2 bis 2000 und insbesondere 2 bis 500 ist, |
| f | eine ganze Zahl von 0 bis 1.000, bevorzugt 0 bis 100, besonders bevorzugt 0 bis 50 und insbesondere 0 bis 30 ist, |
| g | eine ganze Zahl von 0 bis 1.000, bevorzugt 0 bis 200, besonders bevorzugt 0 bis 100 und insbesondere 0 bis 70 ist, |
| h, | i und j unabhängig voneinander ganze Zahlen von 0 bis 500, bevorzugt 0 bis 300, besonders bevorzugt 0 bis 200 und insbesondere 0 bis 100 sind, |
| n | eine ganze Zahl zwischen 2 und 8 ist und mit der Maßgabe, dass die Fragmente mit den Indices d bis j untereinander frei permutierbar, d.h. in der Sequenz innerhalb der Polyetherkette gegeneinander austauschbar sind und |
| R | einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen; sowie |
| $R^1$ | eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, wobei die Kette auch durch Heteroatome wie O, S, Si und/oder N unterbrochen sein kann, oder ein oxyaromatisches System enthaltender Rest oder $R^1$ ist eine ungesättigte etherfunktionelle Gruppe, vorzugsweise eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls linearer oder verzweigter siliconhaltiger organischer Rest |
| $R^2$ | oder $R^3$, sowie $R^5$ oder $R^6$ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste $R^5$ oder $R^6$ gilt, dass sie gleich einem einwertigen Kohlenwasserstoffre st sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind $R^2$ oder $R^3$ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste $R^2$ oder $R^3$ Wasserstoff. |

| | |
|---|---|
| $R^2$-$R^3$ | kann eine $-CH_2CH_2CH_2CH_2$-Gruppe, Y damit eine $-(CH_2CH_2-)$-Gruppe sein. Die Kohlenwasserstoffreste $R^2$ und $R^3$ können ihrerseits weiter substituiert sein und funktionelle Gruppen wie Halogene, Hydroxylgruppen oder Glycidyloxypropylgruppen tragen. |
| $R^4$ | entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann; $R^7$ und $R^8$ sind unabhängig voneinander entweder Wasserstoff, Alkyl-, Alkoxy-, Aryl- oder Aralkylgruppen, |
| $R^9$ $R^{10}$, $R^{11}$ und $R^{12}$ | sind unabhängig voneinander entweder Wasserstoff, Alkyl-, Alkenyl-, Alkoxy-, Aryl- oder Aralkylgruppen wobei der Kohlenwasserstoffrest kann cycloaliphatisch oder aromatisch über das Fragment Z verbrückt sein, wobei Z sowohl einen divalenten Alkylen- als auch Alkenylenrest darstellen kann. |

Die Verbindungen der Formel (1) werden mangels einer ihre Zusammensetzung dezidiert beschreibenden Nomenklatur im Weiteren als Verbindungen der Formel (1) oder als Silylpolyether 1 bezeichnet, auch wenn die Struktur gegebenenfalls nicht die Merkmale eines polymeren Ethers im üblichen Sinn umfasst. Für den Fachmann ist jedoch die strukturelle Übereinstimmung von Polyetherstrukturelementen mit denen der Verbindungen der Formel (1) = Silylpolyether 1 deutlich und klar ersichtlich.

Im Rahmen dieser Erfindung umfasst der Begriff Polyether sowohl Verbindungen der Struktur von Polyethern, Polyetherolen, Polyetheralkoholen, Polyetherestern aber auch Polyethercarbonaten, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse aufweisen und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molmassenverteilung aufweisen und dabei eine mittleres Molmasse von mindestens 300 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition gemäß der OECD-oder REACH-Richtlinien zu genügen scheinen.

Dem Fachmann ist geläufig, dass sich bedingt durch das Herstellungsverfahren und den polymeren Charakter der Verbindungen der Formel (1) regelmäßig Produkte mit Molmassenverteilungen und entsprechender Polydispersitäten bilden. Die in der Definition der Formel (1) angegebenen Zahlenwerte der Indices sind daher als Zahlenmittel der gesamten möglichen Verteilungen der unterschiedlichen Einzelmoleküle in einer Molmassenverteilung zu verstehen.

$R^1$ ist ein Fragment, das dem Starter oder den Startverbindungen für die Alkoxylierungsreaktion entstammt gemäß Formel (2)

$$R^1\text{-}H \qquad (2)$$

(das H gehört zur OH-Gruppe eines Alkohols oder einer phenolischen Verbindung), wobei Starter der Formel (2) allein oder in Mischungen miteinander eingesetzt werden können und mindestens eine reaktive Hydroxylgruppe aufweisen; der Starter kann somit auch Wasser sein.

Als OH-funktionelle Startverbindungen $R^1$-H (2) werden vorzugsweise Verbindungen mit Molmassen von 18 (Wasser) bis 10.000 g/mol, insbesondere 50 bis 2000 g/mol und mit 1 bis 8, bevorzugt mit 1 bis 4 Hydroxylgruppen eingesetzt.

Bevorzugt werden als Starter der Formel (2) solche eingesetzt, bei denen $R^1$ eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, der gegebenenfalls auch durch Heteroatome wie O, S, Si oder N unterbrochen sein kann, oder ein oxyaromatisches System enthaltender Rest; vorzugsweise ist $R^1$ eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest.

Weiterhin kann $R^1$-H ein oxyalkylfunktionelles Siloxan oder ein oxyfunktionelles Polyethersiloxan darstellen. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Vorzugsweise sind die Verbindungen der Formel (2) ausgewählt aus der Gruppe der Alkohole, Polyetherole oder Phenole. Bevorzugt wird als Startverbindung ein ein- oder mehrwertiger Polyetheralkohol oder Alkohol $R^1$-H (das

H gehört zur OH-Gruppe des Alkohols oder Phenols) oder auch Wasser eingesetzt.
Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen (2) verwendet.
Beispielhaft für Verbindungen der Formel (2) seien Wasser, Allylalkohol, Butanol, Octanol, Dodecanol, Stearylalkohol, 2-Ethylhexanol, Cyclohexanol, Benzylalkohol, Ethylenglykol, Propylenglykol, Di-, Tri-und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.
Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die so hergestellten Verbindungen gewähren die synthetische Freiheit, zwischen Alkoxysilylgruppen aufweisenden Polyoxyalkylenverbindungen zu wählen, die Alkoxysilylfunktionen sowohl terminal, als auch isoliert, blockartig kumuliert als aber auch statistisch eingestreut in die Polyoxyalkylenkette enthalten.

Die Verbindungen der Formel (1) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Verbindungen der Formel (1) bestehen aus Alkoxysilylgruppen substituierten Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Je nach verwendetem epoxidfunktionellem Alkoxysilan und evtl. eingesetzten weiteren Monomeren, sowie evtl. auch Kohlendioxid können ester- oder carbonat-modifizierte Silylpolyether erhalten werden. Bevorzugt ist die Alkoxysilyleinheit in der Verbindung der Formel (1) eine Trialkoxysilyleinheit.

Wie $^{29}$Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (1) wiedergegeben sind, solche mit der doppelten, zum Teil dreifachen oder gar vielfachen Molmasse enthalten. Formel (1) gibt mithin die komplexe chemische Realität nur vereinfacht wieder.

Somit stellen die Verbindungen der Formel (1) Zusammensetzungen dar, die auch Verbindungen enthalten, in denen die Summe der Indices (a) plus (b) in Formel (1) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (1) ausgebildet werden. Diese Reaktion kann mehrfach ablaufen bis z.B. alle RO-Gruppen am Silizium gegen weitere Moleküle der Formel (1) ausgetauscht sind. Das Vorhandensein von mehr als einem Signal in typischen $^{29}$Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) sind somit auch nur als Mittelwerte über die verschiedenen, einzeln nicht fassbare Spezies zu verstehen. Die Vielfalt an chemischen Strukturen und Molmassen spiegelt sich auch in den für Silylpolyether 1 typischen und für konventionelle DMC-basierende Polyether völlig ungewöhnlichen breiten Molmassenverteilungen von $M_w/M_n$ von meist > 1, 5 wider.

Bei den Methoden des Standes der Technik können nur Silylgruppen-terminierte Präpolymere gebildet werden. Die als Reaktivkomponente erfindungsgemäß eingesetzten Verbindungen der Formel (1) unterscheiden sich von nach klassischen Methoden modifizierten Oligomeren oder Polymeren darin, dass durch den gezielten Kettenaufbau und die variable Insertion von funktionellen Gruppen in blockartiger aber auch isolierter Weise Strukturen gebildet werden, die sowohl eine Silyl-Funktionalisierung verstreut oder blockartig verteilt über die gesamte Kette aufweisen und zudem zusätzlich aber nicht zwingend erforderlich auch an den Termini eine Silylfunktionalisierung tragen können. Somit besteht eine erhöhte Vernetzungsdichte gegenüber dem Stand der Technik.

Untrennbar mit dem in der noch nicht veröffentlichten Schrift DE 10 2009 022630.3 dargelegten Verfahren der Alkoxylierung von expoxyfunktionellen Alkoxysilanen verbunden, ist die Besonderheit, dass an den Termini immer eine OH-Funktionalität vorhanden ist, hervorgegangen aus der Epoxidringöffnung des jeweils letzten Epoxidmonomers unter Anknüpfung an das OH-funktionelle Ende der wachsenden Kette.

Die Verbindungen der Formel (1) können somit mehr als eine Alkoxysilylgruppe pro Hydroxylgruppe aufweisen.

Gegenstand der Erfindung ist daher ein Verfahren zur Herstellung von Partikeln oder Kompositpartikel bei dem eine wässrige Emulsion eines Silylpolyethers (1) einer Kondensationsreaktion unterworfen wird.

Überraschenderweise wurde gefunden, dass es gelingt, die in einer wässrigen Emulsion vorliegenden Tropfen der Silylpolyether der Formel (1) über eine Kondensationsreaktion auszuhärten, gegebenenfalls mittels Zugabe eines Katalysators über die Wasserphase.

Begünstigt wird dies dadurch, dass selbst die vorzugsweise eingesetzten höher alkoxysilylfunktionalisierten Verbindungen der Formel (1) gut emulgierbare Flüssigkeiten darstellen, die nach der Vernetzung in feste, klebfreie Partikel überführt werden können. Höher alkoxysilylfunktionalisiert bedeutet in diesem Zusammenhang, dass solche Verbindungen gemäß Formel (1) mehr als eine Alkoxysilylgruppe pro Hydroxylgruppe aufweisen, in denen also der Index d Werte von >1, besonders bevorzugt ≥2 annimmt. Damit geht einher, dass die Verbindungen der Formel (1) im Mittel mehr als eine Alkoxysilylgruppe pro Kettenende der aus den Gruppen mit den Indices d bis j gebildeten Kette aufweisen.

Auf Grund ihrer niedrigen Vernetzungsdichte sind herkömmliche, sogenannte silylterminierte Polymere, die nur maximal je eine Silylgruppe an den Kettenenden tragen, im Sinne der erfindungsgemäßen Herstellung von Partikeln und Kompositpartikel schlechter geeignet. Derartige Alkoxysilylgruppen tragende Präpolymere weisen die zur Vernetzung geeigneten Alkoxysilylgruppen nur am Ende einer jeweils langen Polymerkette auf und werden z.B. in WO 2005/100482 und EP-A1-1 967 550, EP-A1-1 824 904, US 7,365,145, US 3,627,722 oder US 3,632,557 und US 3,971,751 beschrieben.

Gegenstand der Erfindung ist daher ein Verfahren zur Herstellung von Silylpolyether-Partikeln und -Kompositpartikeln, welches dadurch gekennzeichnet ist, dass eine wässrige Emulsion, enthaltend mindestens ein Alkoxysilylgruppen tragendes Alkoxylierungsprodukt, das bevorzugt mindestens eine Hydroxylgruppe aufweist, insbesondere aber Verbindungen der Formel (1), sowie die Emulsion stabilisierende Emulgatoren und ein oder mehrere Coemulgatoren, vorzugsweise unter Verwendung eines der wässrigen Phase zugegebenen Katalysators ausgehärtet werden.

Das Verfahren zur Herstellung der Silylpolyether-Partikel umfasst die Schritte

a) Erzeugen einer Emulsion aus Wasser und einer organischen Phase, wobei die organische Phase mindestens ein Alkoxysilylgruppen tragendes Alkoxylierungsprodukt, das bevorzugt mindestens eine Hydroxylgruppe aufweist, insbesondere aber Verbindungen der allgemeinen Formel (1) und optional weitere Additive umfasst,
wobei optional der pH-Wert der wässrigen Phase auf einen Wert zwischen 5 und 9, bevorzugt zwischen 6 und 8,5 und besonders bevorzugt zwischen 7 und 8 eingestellt wird und anschließend

b) Kondensation der Silylgruppen und Aushärtung der inneren Phase vorzugsweise in Gegenwart eines Katalysators, , welcher der äußeren (wässrigen) Phase in einer Konzentration von 0,001 bis 20,0 Gew.-%, bevorzugt 0,1 bis 10,0 Gew.-% und besonders bevorzugt 1,0 bis 5,0 Gew.-%, bezogen auf die innere Phase, zugeführt wird.

c) Abtrennung des Wassers.

Der Gewichtsanteil der organischen Phase gegenüber der Wasserphase beträgt 1 bis 99 Gew.-%, bevorzugt 5 bis 70 Gew.-% und besonderes bevorzugt 10 bis 50 Gew.-%. Der Gewichtsanteil der Alkoxysilylgruppen tragenden Alkoxylierungsprodukte, insbesondere aber der Verbindungen der Formel (1) in der organischen Phase beträgt 1 bis 100 Gew.-%, bevorzugt 10 bis 99 Gew.-% und besonders bevorzugt 50 bis 98 Gew.-%. Der verbleibende Anteil zu 100 Gew.-% der organischen Phase besteht aus weiteren Additiven und/oder Lösungsmitteln. Der Katalysator wird der äußeren (wässrigen) Phase in einer Konzentration von 0,001 bis 20,0 Gew.-%, bevorzugt 0,1 bis 10,0 Gew.-% und besonders bevorzugt 1,0 bis 5,0 Gew.-%, bezogen auf die innere Phase, zugeführt.

Ebenfalls Gegenstand der vorliegenden Erfindung sind so hergestellte Partikel und Kompositpartikel aus mindestens einem Alkoxysilylgruppen tragenden Alkoxylierungsprodukt, das bevorzugt mindestens eine Hydroxylgruppe aufweist, insbesondere aber Verbindungen der Formel(1).

Das erfindungsgemäße Verfahren hat den Vorteil, dass rieselfähige Partikel aus den Alkoxysilylgruppen tragenden Alkoxylierungsprodukten, die bevorzugt mindestens eine Hydroxylgruppe aufweisen, insbesondere aber den Verbindungen der Formel(1) hergestellt werden können, die ohne weitere Zerkleinerungsschritte genutzt werden können.

Ein weiterer Gegenstand der Erfindung ist die Verwendung der erfindungsgemäßen Partikel oder Kompositpartikel beispielsweise als Additiv für Klebstoffe, Beschichtungen, Reaktionsharzsysteme, Vergußmassen, Kunststoffe und Dichtstoffe z.B. zur Erhöhung der Schlagzähigkeit. Verwendbar sind die erfindungsgemäßen Partikel oder Kompositpartikel auch als Additiv für kosmetische Produkte, zum Beispiel zur Erzeugung eines angenehmen, samtigen Hautgefühls. Verwendbar sind die erfindungsgemäßen Partikel oder Kompositpartikel auch als Additiv zur Reduzierung von

Rissbildung in Seifenkörper und anderen festen Reinigungskörper. Verwendbar sind die erfindungsgemäßen Partikel oder Kompositpartikel auch als Additive zur Verbesserung der mechanischen Eigenschaften von Vulkanisaten und/oder Kautschukformkörpern. Verwendbar sind die erfindungsgemäßen Partikel oder Kompositpartikel auch als Beschichtungsmaterial für Textilien zur Reduzierung des Reibungswiderstandes. Verwendbar sind die erfindungsgemäßen Partikel oder Kompositpartikel auch als Kapselmaterial oder Trägermaterial für die Verkapselung von beispielsweise festen oder flüssigen kosmetischen oder medizinischen oder pharmazeutischen Wirkstoffen, Katalysatoren oder Pestiziden. Verwendbar sind die erfindungsgemäßen Partikel oder Kompositpartikel auch als Material zur Verkapselung von Zusatzstoffen wie beispielsweise Vitaminen, Duftstoffen oder Geschmackstoffen. Verwendbar sind die erfindungsgemäßen Partikel oder Kompositpartikel auch als Material zur Herstellung von Kapsel-Toner für beispielsweise elektrophotografische und/oder Laserdruckverfahren.

Die erfindungsgemäß hergestellten Partikel oder Kompositpartikel lassen sich in Hinblick auf: Farbe, Partikelgröße, Porenvolumen, Partikelgrößenverteilung, Porenvolumenverteilung, Härte, Elastizität, Schüttvolumen, antistatische Eigenschaften, Oberflächenladung, etc. leicht charakterisieren. Die dazu anzuwendenden Methoden sind dem Fachmann wohlbekannt.

Das erfindungsgemäße Verfahren zur Herstellung von erfindungsgemäßen Silylpolyether-Partikeln wird nachfolgend beispielhaft beschrieben, ohne dass die Erfindung auf diese beispielhaften Ausführungsformen beschränkt sein soll.

Die Herstellung wässriger Emulsionen aus Verbindungen der Formel(1) kann nach den in der noch nicht veröffentlichten Schrift DE 10 2009 022630.3 offenbarten Verfahren erfolgen. Der Inhalt der Beschreibung und der Ansprüche der DE 10 2009 022630.3 ist hiermit vollumfänglich als Bestandteil dieser Offenbarung anzusehen.

Es kann von Vorteil sein, dass die wässrige Phase gelöste Salze enthält, wie z.B. Metallsalze, Natriumchlorid, Natriumsulfat oder Ammoniumsulfat.

Als Emulgatoren können alle üblichen Emulgatoren eingesetzt werden. Dabei kann es sich um anionische, kationische, amphotere oder nichtionische oberflächenaktive Substanzen handeln. Eine umfassende Liste findet sich in DE 10 2009 022630.3.

Typische Emulgatoren sind z. B. Alkylsulfate, vorzugsweise mit einer Kettenlänge von 10 bis 24 C-Atomen, Alkylethersulfate, vorzugsweise mit 10 bis 24 C-Atomen im hydrophoben Rest und mit bevorzugt bis zu 40 Ethylenoxid- oder Propylenoxid-Einheiten, Alkyl- und alkylarylsulfonate mit vorzugsweise 10 bis 24 C-Atomen, Ester und Halbester der Sulfobernsteinsäure mit einwertigen Alkoholen, Alkyl- und Alkenylcarboxylate mit vorzugsweise einer Kettenlänge von 10 bis 24 C-Atomen, Alkylpolyglykolether und Alkylarylpolyglykolether mit vorzugsweise 8 bis 24 C-Atomen und jeweils 2 bis 40 Ethylenoxideinheiten, Alkyl- und Alkenylalkohole mit vorzugsweise 8 bis 24 C-Atomen, ethoxylierte pflanzliche Öle wie z . B . Rizinusölethoxylate, Sorbitanester und ethoxylierte Sorbitanester, Polyethylenoxid-Polypropylenoxid-Polyethylenoxid Triblockcopolymere und ethoxylierte Fettamine.

Es kann vorteilhaft sein, wenn in Schritt a) eine festkörperstabilisierte Emulsion erzeugt wird. Dazu können als Emulgatoren feste oder flüssige, insbesondere partikuläre, vorzugsweise in mindestens einer Dimension nanoskalige Partikel oder nanostrukturierte Partikel oder Nanoobjekte sein, die besonders bevorzugt ausgewählt sind aus der Gruppe der Metalloxide, Mischoxide, Nitride, Hydroxide, Carbonate, Silikate, Siliconharze, Silicone und/oder organischen Polymere, die vorzugsweise zumindest (teil-)hydrophobiert sind, z. B. mit mindestens einer Verbindung aus der Gruppe der Silane, Siloxane, quaternären Ammoniumverbindungen, kationischen Polymere und Fettsäuren oder deren Anionen, eingesetzt werden. Unter Nanoobjekten werden im Rahmen der vorliegenden Erfindung Materialien verstanden, die entweder in ein, zwei oder drei äußeren Dimensionen nanoskalig sind, vorzugsweise zumindest eine Dimension eine Größe von 1 bis 100 nm aufweist, wie z. B. Nanoplättchen, Nanostäbchen und Nanopartikel. Unter nanostrukturierten Partikeln werden in der vorliegenden Erfindung Materialien bzw. Partikel verstanden, die eine innere nanoskalige Struktur aufweisen. Typische Vertreter sind z. B. Aggregate und Agglomerate von Nanoobjekten.

Besonders bevorzugte partikuläre Emulgatoren weisen eine mittlere Primärpartikelgröße in mindestens einer Dimension von < 1.000 nm, bevorzugt < 500 nm und besonders bevorzugt von 1 bis 100 nm auf. Die Primärpartikelgröße kann auf bekannte Weise bestimmt werden. Vorzugsweise wird die Primärpartikelgröße durch die optische Auswertung einer durch Transmissionselektronenmikroskopie erstellten Aufnahme bestimmt.

Die partikulären Emulgatoren können in dem erfindungsgemäßen Verfahren als solche oder in Form von Dispersionen oder Solen, insbesondere wässrigen Dispersionen oder Solen eingesetzt werden.

Insbesondere bei der Verwendung von partikulären Emulgatoren kann es vorteilhaft sein, wenn in Schritt a) des erfindungsgemäßen Verfahrens die Herstellung der Emulsion unter Zugabe eines oder mehrerer Coemulgatoren durchgeführt wird. Als Coemulgatoren können in dem erfindungsgemäßen Verfahren insbesondere solche Verbindungen eingesetzt werden, die mit den Festkörperemulgator-Partikeln in Wechselwirkung treten, vorzugsweise solche, die auf die Festkörperemulgator-Partikel aufziehen und damit hydrophobieren. In dem erfindungsgemäßen Verfahren können als Coemulgatoren insbesondere Verbindungen ausgewählt aus der Gruppe der kationischen Tenside eingesetzt werden. Als kationische Coemulgatoren können insbesondere kationische Ammoniumverbindungen eingesetzt werden. Solche Verbindungen sind z. B. unter den Handelsnamen VARISOFT® 470 P, VARISOFT® TC-90, VARISOFT® 110,

AROSURF® TA-100, ADOGEN® 442-100 P, ADOGEN® 432, ADOGEN® 470, ADOGEN® 471, ADOGEN® 464, VARIQUAT® K 300, VARIQUAT® B 343, VARIQUAT® 80 ME, REWOQUAT® 3690, REWOQUAT® WE 15, REWOQUAT® WE18, REWOQUAT® WE 28 oder REWOQUAT® CR 3099 bei der Evonik Goldschmidt GmbH erhältlich. Bevorzugt wird in dem erfi ndungsgemäßen Verfahren Cetyltrimethylammoniumbromid oder VARISOFT® PATC als kationischer Coemulgator eingesetzt.

Wie dem Fachmann bekannt, geschieht die Vernetzung oder Härtung von Alkoxysilylgruppen in einem zweistufigen chemischen Prozess, bei dem in einem ersten Schritt in Gegenwart von Wasser die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOHfunktionellen Intermediate mit reaktive Gruppen aufweisenden Substraten, z.B. besonders gut mit OH-Funktionen tragenden silikatischen Oberflächen, und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen. Im Gegensatz zu einem Beschichtungsverfahren bei dem weitgehend lösungsmittelfrei gearbeitet wird, werden hier die Partikel aus einer (verdünnten Lösung) Emulsion in situ in einem Heterophasensystem abgeschieden.

Als Katalysatoren für die Vernetzung bzw. Härtung der Alkoxysilylgruppen können die bekannten Polyurethanisierungs-, Allophanatisierungs- oder Biuretisierungskatalysatoren verwendet werden, die dem Fachmann an sich bekannt sind, bzw. die literaturbekannten und üblicherweise zur Hydrolyse und Kondensation von Alkoxysilanen eingesetzten Katalysatoren. Hierzu zählen Verbindungen, wie beispielsweise die Zinksalze Zinkoctoat, Zinkacetylacetonat und Zink-(II)-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat. Bevorzugt ist die Verwendung von Zinkoctoat (Zink-(II)-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibutylzinndiacetylacetonat, Dioctylzinndiacetylacetonat, Dibutylzinndiacetat oder Dibutylzinndioctoat etc., verwendet werden. Des Weiteren können auch Wismutkatalysatoren, z.B. der Borchi-Katalysator, Titanverbindungen, z.B. Titan(IV)isopropylat oder Titanylacetylacetonat, Eisen(III)-Verbindungen, z.B. Eisen(III)acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Milchsäure, Trifluoressigsäure, Methansulfonsäure, p-Toluolsulfonsäure oder Benzoylchlorid, Salzsäure, Phosphorsäure und deren Mono- und/oder Diester, wie z.B. Butylphosphat, (Iso-)-Propylphosphat, Dibutylphosphat etc., sind als Katalysatoren geeignet. Selbstverständlich können auch Kombinationen mehrerer Katalysatoren eingesetzt werden. Bevorzugt werden Metallsalze, Metallkomplexe und metallorganische Verbindungen. Besonders bevorzugt werden metallorganische Verbindungen mit Zinn, Zink, Titan und Wismut.

Der Katalysator wird in Mengen von 0,001 bis 20,0 Gew.-%, bevorzugt 0,01 bis 10,0 Gew.-% und besonders bevorzugt 1,0 bis 5,0 Gew.-% bezogen auf die alkoxysilylfunktionellen Verbindungen der Formel(1) eingesetzt. Der Katalysator kann in einer Portion oder aber auch portionsweise oder auch kontinuierlich zugegeben werden. Bevorzugt ist Zugabe der gesamten Menge in einer Portion.

Zur Herstellung der erfindungsgemäßen Partikel und Kompositpartikel können die Silylpolyether 1 im Gemisch mit anderen reaktiven Komponenten, vorzugsweise mit anderen ebenfalls Alkoxysilangruppen aufweisenden Verbindungen verwendet werden. Diese Alkoxysilane können sowohl monomere Silane wie die der Formel (3) als auch polymergebundene Silane sein,

$$U_xSiV_{(4-x)} \quad (3)$$

wobei U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxygruppen und x = 1, 2, 3 oder 4 darstellen. Hydrolysierbar bedeutet im Rahmen dieser Erfindung, dass mindestens 80 % der Gruppen unter den gewählten Bedingungen hydrolysiert und damit abgespalten werden können.

Die Alkylkette kann 0 bis 50, vorzugsweise 0 bis 22 Kohlenstoffatome aufweisen und auch durch Heteroatome wie Sauerstoff oder Stickstoff oder Schwefel unterbrochen sein oder auch ein Siliconrest sein. Der aromatische Rest kann auch heteroaromatisch sein. Die Reste U und V können ggf. einen oder mehrere übliche Substituenten, wie

beispielsweise Halogen oder Alkoxy aufweisen.

Nicht hydrolysierbare Reste U nach der Formel (3) mit funktionellen Gruppen können ausgewählt werden aus dem Bereich der Glycidyl- oder Glycidyloxyalkylen-Reste, wie beispielsweise β-Glycidyloxyethyl, γ-Glycidyloxypropyl, δ-Glycidyloxypropyl, ε-Glycidyloxypentyl, ω-Glycidyloxyhexyl oder 2-(3,4-Epoxycyclohexyl)ethyl, der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl oder Acryloxybutyl, und dem 3-Isocyanatopropyl-Rest, und/oder cyclische und/oder lineare (poly)urethangruppen-haltige und/oder harnstoffhaltige und/oder (poly)aminogruppenhaltiger Rest.

Besonders verbreitet ist der Einsatz von monomeren Trimethoxysilyl- und Triethoxysilylgruppen tragenden Verbindungen, die in Gegenwart von Feuchtigkeit und geeigneten Katalysatoren zumeist schon bei Raumtemperatur in der Lage sind, unter Abspaltung der Alkoxygruppen und Ausbildung von Si-O-Si-Bindungen miteinander zu kondensieren. Solche organofunktionellen monomeren Silane sind zum Beispiel N-Cyclohexylaminomethyltrimethoxysilan, N-Cyclohexyl-3-aminopropyltriethoxysilan, 3-Aminopropyltrimethoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan, Octyltrimethoxysilan, Octyltriethoxysilan und Hexadecyltrimethoxysilan. Dem Fachmann ist die Methodik im Wesentlichen bekannt.

Zur Herstellung der erfindungsgemäßen Partikel und Kompositpartikel können die Verbindungen der Formel (1) im Gemisch mit weiteren flüssigen oder festen Additiven verwendet werden. Neben organischen Lösungsmitteln oder flüssigen Siloxanen können weiterhin auch partikuläre Additive verwendet werden. Vorteilhaft kann es sein, wenn die Oberfläche der eingesetzten Additive mindestens eine funktionelle Gruppe aufweist, so dass es zu chemischen Reaktionen zwischen Verbindungen der Formel(1) mit den funktionellen Gruppen auf der Partikeloberfläche kommt. Beispiele solcher Additive sind Metalle und Metalllegierungen, Metalloxide, Mischoxide, Nitride, Carbide, Hydroxide, Carbonate oder Silikate. Weitere Beispiele solcher Additive sind organische Partikel, wie zum Beispiel solche auf Basis von Zellulose, Lignin, oxydiertes Polyethylen oder ausgehärtetes Epoxidharz, Siloxanharze, Farbstoffe und/oder organische oder anorganische Pigmente.

Weitere Gegenstände der Erfindung werden durch die Ansprüche beschrieben, deren Offenbarungsgehalt vollumfänglich Bestandteil dieser Beschreibung ist.

Die erfindungsgemäße Herstellung von Partikeln wird nachfolgend beispielhaft beschrieben, ohne dass die Erfindung als auf diese beispielhaften Ausführungsformen beschränkt angesehen werden kann.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

Ausführungsbeispiele:

In den nachfolgenden Beispielen wurden die folgenden Trialkoxysilylgruppen enthaltenden Silylpolyether 1 eingesetzt, die gemäß den noch nicht offengelegten Schriften DE 10 2009 022630.3 nach dem Verfahrensprinzip der DMC-katalysierten Alkoxylierung von 3-Glycidyloxypropyltriethoxysilan (Dynasylan® GLYEO) der Evonik Degussa GmbH hergestellt worden sind. PO bedeutet Propylenoxid..

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Die Viskositäten wurden in Anlehnung an die DIN 53019 mit einem Rotationsviskosimeter der Marke Brookfield (Modell LVT) bei 25°C gemessen.

OH-Zahlen wurden nach der Kaltacetylierungsmethode in Anlehnung an die Analysenvorschrift C-V 17A (98) der Deutschen Gesellschaft für Fettwissenschaft (DGF) gemessen.

Der Epoxidsauerstoffgehalt der Silylpolyether wurde in Gegenwart von konzentrierter Salzsäure nach dem Prinzip der Rücktitration mit Natronlauge bestimmt. Trialkoxysilylpolyether SP-1:

Niedermolekularer, Octanol-gestarteter, fast farbloser und niedrig viskoser blockartig aufgebauter Polyether der mittleren Molmasse von ca. 3000 g/mol und siebenfacher Trialkoxysilanfunktionalität.

Chemischer Aufbau gemäß Monomerendosage:

1-Octanol + 8 mol Propylenoxid + 3,5 mol GLYEO + 8 mol Propylenoxid + 3,5 mol GLYEO + 2 mol Propylenoxid

Epoxidsauerstoffgehalt <0,05 %, OH-Zahl 19,5 mg KOH/g

Trialkoxysilylpolyether SP-2:

Niedermolekularer, Octanol-gestarteter, fast farbloser und niedrig viskoser Polyether der mittleren Molmasse von ca. 430 0 g / mol und zwölffacher Trialkoxysilanfunktionalität.

Chemischer Aufbau gemäß Monomerendosage:

1-Octanol + 7 mol Propylenoxid + 12 mol GLYEO/10 mol Propylenoxid
Epoxidsauerstoffgehalt <0,05 %, OH-Zahl 12,2 mg KOH/g

Trialkoxysilylpolyether SP-3:

Niedermolekularer, Octanol-gestarteter, fast farbloser und niedrig viskoser Polyether der mittleren Molmasse von c a . 3 0 0 0 g / m o l u n d fünffacher Trialkoxysilanfunktionalität.

Chemischer Aufbau gemäß Monomerendosage:

1-Octanol + 8 mol Propylenoxid + 5 mol GLYEO/19 mol Propylenoxid
Epoxidsauerstoffgehalt <0,05 %, Gewichtsmittel Mw lt. GPC-Analyse 3125 g/mol

Trialkoxysilylpolyether SP-4:

Hochmolekularer, Polypropylenglykol-gestarteter, fast farbloser und mittelviskoser Polyether der mittleren Molmasse von ca. 10000 g/mol und sechsfacher Trialkoxysilanfunktionalität.

Chemischer Aufbau gemäß Monomerendosage:

Polypropylenglykol (2000 g/mol) + 17 mol Propylenoxid + 6 mol GLYEO/92 mol Propylenoxid
Epoxidsauerstoffgehalt <0,05 %, Gewichtsmittel Mw lt. GPC-Analyse 10280 g/mol

Beispiel 1:

81,2 g demineralisiertes Wasser wurden mit 7,5 g LUDOX® SM-AS (Firma Grace) versetzt. Das Gemisch wurde mit verd. Salzsäure auf einen pH-Wert zwischen 7 und 8 eingestellt. 10 g des Trialkoxysilylpolyethers SP-1 bzw. SP-2 wurden zugegeben und 30 min in einem Vakuumdissolver bei 5000 rpm voremulgiert. 0,43-1,30 g einer 5 Gewichts%-igen (bzgl. des PATC) VARISOFT® PATC-Lösung (Evonik Goldschmidt GmbH, quaternäre Ammoniumverbindung) wurden hinzugegeben und es wurde abermals 30 min in einem Vakuumdissolver bei 5000 rpm emulgiert.
Zur Aushärtung wurden 20 g der Emulsion mit 0,4 g einer 10 Gewichts%-igen Lösung von Dibutylzinndiacetylacetonat in Acetylaceton versetzt, kräftig geschüttelt und 18 h bei Raumtemperatur stehengelassen. Danach wurden die Partikel abfiltriert und mit Wasser und Ethanol gewaschen. Die Trocknung bei 60 °C im Trockenschrank ergab ein rieselfähiges Pulver.

Beispiel 2:

87,0 g demineralisiertes Wasser wurden mit 2,5 g LUDOX® SM-AS (Firma Grace) versetzt. Der pH-Wert wurde mit verd. Salzsäure wie in Beispiel 1 eingestellt. 10 g des Trialkoxysilylpolyethers SP-1 bzw. SP-3 wurden zugegeben und 30 min in einem Vakuumdissolver bei 5000 rpm voremulgiert. 0,43 g einer 5 Gew.-%-igen (bzgl. des PATC) VARISOFT® PATC-Lösung (Evonik Goldschmidt GmbH) wurden hinzugegeben und es wurde abermals 30 min in einem Vakuumdissolver bei 5000 rpm emulgiert.
Zur Aushärtung wurden 20 g der Emulsion mit 0,4 g einer 10 Gew.-%-igen Lösung von Dibutylzinndiacetylacetonat in Acetylaceton versetzt, kräftig geschüttelt und 18 h bei Raumtemperatur stehengelassen. Danach wurden die Partikel abfiltriert und mit Wasser und Ethanol gewaschen. Die Trocknung bei 60 °C im Trockenschrank ergab ein rieselfähiges Pulver.

Beispiel 3:

81,2 g demineralisiertes Wasser wurden mit 7,5 g LUDOX® SM-AS (Firma Grace) versetzt. Der pH-Wert wurde mit verd. Salzsäure wie in Beispiel 1 eingestellt. 10 g des Trialkoxysilylpolyethers SP-4 wurden zugegeben und 30 min in einem Vakuumdissolver bei 5000 rpm voremulgiert. 1,30 g einer 5 Gewichts%-igen (bzgl. des PATC) VARISOFT® PATC-Lösung (Evonik Goldschmidt GmbH) wurden hinzugegeben und es wurde abermals 30 min in einem Vakuumdissolver bei 5000 rpm emulgiert.
Zur Aushärtung wurden 20 g der Emulsion mit 0,4 g einer 10 Gewichts%-igen Lösung von Dibutylzinndiacetylacetonat in Acetylaceton versetzt, kräftig geschüttelt und 1 h auf 80 °C erhitzt. Danach wurden die Partikel abfiltriert und mit Wasser und Ethanol gewaschen. Die Trocknung bei 60 °C im Trockenschrank ergab ein rieselfähiges Pulver.

Beispiel 4:

87,0 g gesättigte Natriumsulfat-Lösung wurden mit 2,5 g LUDOX® SM-AS (Firma Grace) versetzt. Der pH-Wert wurde mit verd. Salzsäure wie in Beispiel 1 eingestellt. 10 g des Trialkoxysilylpolyethers SP-1 wurden zugegeben und 30 min in einem Vakuumdissolver bei 5000 rpm voremulgiert. 0,43 g einer 5 Gewichts%-igen (bzgl. des PATC) VARISOFT® PATC Lösung (Evonik Goldschmidt GmbH) wurden hinzugegeben und es wurde abermals 30 min in einem Vakuumdissolver bei 5000 rpm emulgiert.
Zur Aushärtung wurden 20 g der Emulsion mit 0,4 g einer 10 Gewichts%-igen Lösung von Dibutylzinndiacetylacetonat in Acetylaceton versetzt, kräftig geschüttelt und 1 h auf 80 °C erhitzt. Danach wurden die Partikel abfiltriert und mit Wasser und Ethanol gewaschen. Die Trocknung bei 60 °C im Trockenschrank ergab ein rieselfähiges Pulver. Figur 2 zeigt eine Mikroskopaufnahme der ausgehärteten Dispersion. Die Dispersion ist polydispers und zeigt eine maximale Primärpartikelgröße von 8 Mikrometer.

Beispiel 5:

15,0 g Tagat® R200 (Polyoxyethylen (200) Glyceridester, Evonik Goldschmidt GmbH), 10,0 g TEGO® Alkanol S2 (Octadecanol, Polyoxyethylen (2) Ether, Evonik Goldschmidt GmbH) und 75,0 g Wasser wurden in einem Rührtopf auf 60 °C aufgeheizt und mit einer Mizerscheibe bei 1500 rpm gerührt, bis eine homogene, viskose Paste entstand. Unter Zuhilfenahme eines Tropftrichters wurden innerhalb von 10 Minuten 300,0 g des Alkoxysilylpolyethers SP-1 tropfenweise in die Paste eingearbeitet. Die fertige Paste wurde 10 Minuten nachgerührt. Danach wurde die Paste, immer noch bei 60 °C, mit den restlichen 400,0 g Wasser verdünnt.
Die Emulsion wurde mit 6,0 g Dibutylzinndiacetylacetonat versetzt. Sie wurde 2 Stunden unter Rühren bei 1000 rpm auf 60 °C gehalten. Dann wurde die Emulsion abgekühlt. Die Partikel wurden durch fünfstündiges Zentrifugieren bei 7000 rpm abgetrennt(Sigma 4-15 Labortischzentrifuge). Die Trocknung des Sediments bei 60 °C im Trockenschrank ergab ein rieselfähiges Pulver.

Beispiel 6:

15,0 g Tagat® R200 (Polyoxyethylen (200) Glyceridester, Evonik Goldschmidt GmbH), 10,0 g TEGO® Alkanol S2 (Octadecanol, Polyoxyethylen (2) Ether, Evonik Goldschmidt GmbH) und 75,0 g Wasser wurden in einem Rührtopf auf 60 °C aufgeheizt und mit einer Mizerscheibe bei 1500 rpm gerührt, bis eine homogene, viskose Paste entstand. Unter Zuhilfenahme eines Tropftrichters wurden innerhalb von 10 Minuten einer Lösung enthaltend 270,0 g des Alkoxysilylpolyethers SP-1 und 30,0 g Octyltriethoxysilan tropfenweise in die Paste eingearbeitet. Die fertige Paste wurde 10 Minuten nachgerührt. Danach wurde die Paste, immer noch bei 60 °C, mit den restlichen 400,0 g Wasser verdünnt. Figur 3 zeigt ein mikroskopisches Bild der Emulsion. Die Emulsion ist polydispers und hat einen maximalen Tropfendurchmesser von etwa 30 Mikrometer.
Die Emulsion wurde mit 6,0 Gramm Dibutylzinndiacetylacetonat versetzt. Sie wurde 2 Stunden unter Rühren bei 1000 rpm auf 60 °C gehalten Dann wurde die Emulsion abgekühlt. Die Partikel wurden durch fünfstündiges Zentrifugieren bei 7000 rpm abgetrennt (Sigma 4-15 Labortischzentrifuge). Die Trocknung des Sediments bei 60 °C im Trokkenschrank ergab ein rieselfähiges Pulver.

Beispiele 7-8: Kompositpartikel

Beispiel 7:

87,0 g gesättigte Natriumsulfat-Lösung wurden mit 2,5 g LUDOX® SM-AS (Firma Grace) versetzt. Der pH-Wert wurde mit verd. Salzsäure wie in Beispiel 1 eingestellt. 10,5 g einer Mischung aus Trialkoxysilylpolyethers SP-4

mit 5 Gewichts-% der VP AdNano® MagSilica (Evonik Degussa GmbH) wurden zugegeben und 30 min in einem Vakuumdissolver bei 5000 rpm voremulgiert. 0,43 g einer 5 Gewichts%-igen (bzgl. des PATC) VARISOFT® PATC-Lösung (Evonik Goldschmidt GmbH) wurden hinzugegeben und das es wurde abermals 30 min in einem Vakuumdissolver bei 5000 rpm emulgiert.
Zur Aushärtung wurde die Emulsion mit 2 g einer 10 Gewichts%-igen Lösung von Dibutylzinndiacetylacetonat in Acetylaceton versetzt, kräftig geschüttelt und 2 h auf 80 °C erhitzt. Danach wurden die Partikel abfiltriert und mit Wasser und Ethanol gewaschen. Die Trocknung bei Raumtemperatur ergab ein rieselfähiges Pulver.

Beispiel 8:

87,0 g gesättigte Natriumsulfat-Lösung wurden mit 7,5 g LUDOX® SM-AS (Firma Grace) versetzt. Der pH-Wert wurde mit verd. Salzsäure wie in Beispiel 1 eingestellt. 10,5 g einer Mischung aus Trialkoxysilylpolyethers SP-1 mit 1 Gewichts-% Menthol bzw. 5 Gewichts-% AEROSIL® R 805(Evonik Degussa GmbH) wurden zugegeben und 30 min in einem Vakuumdissolver bei 5000 rpm voremulgiert. 0,43 g einer 5 Gewichts%-igen (bzgl. des PATC) VARISOFT® PATC-Lösung(Evonik Goldschmidt GmbH) wurden hinzugegeben und das es wurde abermals 30 min in einem Vakuumdissolver bei 5000 rpm emulgiert.
Zur Aushärtung wurde die Emulsion mit 2 g einer 10 Gewichts%-igen Lösung von Dibutylzinndiacetylacetonat in Acetylaceton versetzt, kräftig geschüttelt und 2 h auf 80 °C erhitzt. Danach wurden die Partikel abfiltriert und mit Wasser und Ethanol gewaschen. Die Trocknung bei Raumtemperatur ergab ein rieselfähiges Pulver.

**Patentansprüche**

**1.** Verfahren zur Herstellung von Partikeln oder Kompositpartikeln durch Kondensation von Alkoxysilylgruppen tragenden Alkoxylierungsprodukten mit einer Molmasse von größer oder gleich 300 g/mol.

**2.** Verfahren nach Anspruch 1, **dadurch gekennzeichnet, dass** die Alkoxysilylgruppen tragenden Alkoxylierungsprodukte mindestens eine Hydroxylgruppe aufweisen.

**3.** Verfahren nach Anspruch 1 oder 2, **dadurch gekennzeichnet, dass** durch Kondensation einer emulgierten organischen Phase, enthaltend mindestens ein Alkoxysilylgruppen tragendes Alkoxylierungsprodukt, in einer wässrigen, optional festkörperstabilisierten Phase
und vorzugsweise in Gegenwart eines Katalysators die Partikel oder Kompositpartikel erzeugt werden.

**4.** Verfahren nach zumindest einem der Ansprüche 1 bis 3, **gekennzeichnet durch** die Verfahrensschritte

a) Erzeugen einer Emulsion aus Wasser und einer organischen Phase, wobei die organische Phase mindestens ein Alkoxysilylgruppen tragendes Alkoxylierungsprodukt und optional weitere Additive umfasst,
wobei optional der pH-Wert der wässrigen Phase auf einen Wert zwischen 5 und 9 eingestellt wird und anschließend
b) Kondensation der Silylgruppen und Aushärtung der inneren Phase vorzugsweise in Gegenwart eines Katalysators,
c) Abtrennung des Wassers.

**5.** Verfahren nach zumindest einem der Ansprüche 1 bis 4 **dadurch gekennzeichnet, dass** als Alkoxysilylgruppen tragenden Alkoxylierungprodukte eine oder mehrere Verbindungen der Formel (1)

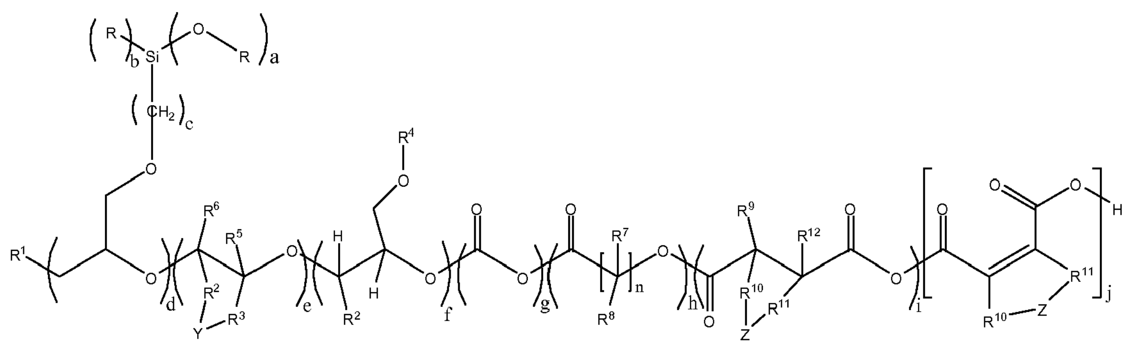

(1) Silylpolyether 1 - siehe auch Fig. 1 wobei

a eine ganze Zahl von 1 bis 3 ist,
b eine ganze Zahl von 0 bis 2 ist, und die Summe von a und b gleich 3 ist,
c eine ganze Zahl von 0 bis 22 ist,
d eine ganze Zahl von 1 bis 500 ist,
e eine ganze Zahl von 0 bis 10.000 ist,
f eine ganze Zahl von 0 bis 1.000 ist,
g eine ganze Zahl von 0 bis 1.000 ist,
h, i und j unabhängig voneinander ganze Zahlen von 0 bis 500 sind,
n eine ganze Zahl zwischen 2 und 8 ist und mit der Maßgabe, dass die Fragmente mit den Indices d bis j untereinander frei permutierbar, d.h. in der Sequenz innerhalb der Polyetherkette gegeneinander austauschbar sind und R einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 2 0 Kohlenstoffatomen darstellt;
$R^1$ eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, wobei die Kette auch durch Heteroatome wie O, S, Si und/oder N unterbrochen sein kann, oder ein oxyaromatisches System enthaltender Rest oder $R^1$ ist eine ungesättigte etherfunktionelle Gruppe, oder eine einfach oder mehrfach annelierte oxyaromatische Gruppe oder ein linearer oder verzweigter siliconhaltiger organischer Rest
$R^2$ oder $R^3$, sowie $R^5$ oder $R^6$ gleich oder auch unabhängig voneinander H oder ein gesättigter oder gegebenenfalls einfach oder mehrfach ungesättigter, auch weiter substituierter, einoder mehrwertiger Kohlenwasserstoffrest, wobei für die Reste $R^5$ oder $R^6$ gilt, dass sie gleich einem einwertigen Kohlenwasserstoffrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y nicht vorhanden, so sind $R^2$ oder $R^3$ unabhängig voneinander gleich ein linearer oder verzweigter Rest mit 1 bis 20 Kohlenstoffatomen;
$R^2$-$R^3$ kann eine $-CH_2CH_2CH_2CH_2$-Gruppe, Y damit eine-$(CH_2CH_2-)$ -Gruppe sein und die Kohlenwasserstoffreste $R^2$ und $R^3$ ihrerseits weiter substituiert sein können und funktionelle Gruppen wie Halogene, Hydroxylgruppen oder Glycidyloxypropylgruppen tragen.
$R^4$ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
$R^7$ und $R^8$ sind unabhängig voneinander entweder Wasserstoff, Alkyl-, Alkoxy-, Aryl- oder Aralkylgruppen,
$R^9$, $R^{10}$, $R^{11}$ und $R^{12}$ sind unabhängig voneinander entweder Wasserstoff, Alkyl-, Alkenyl-, Alkoxy-, Aryl- oder Aralkylgruppen, wobei der Kohlenwasserstoffrest kann cycloaliphatisch oder aromatisch über das Fragment Z verbrückt sein, wobei Z sowohl einen divalenten Alkylenals auch Alkenylenrest darstellen kann, verwendet wird.

6. Verfahren nach Anspruch 3 oder 4, **dadurch gekennzeichnet, dass** im zweiten Verfahrensschritt ein Katalysator über die Wasserphase zugegeben wird.

7. Verfahren nach zumindest einem der Ansprüche 1 bis 6, **dadurch gekennzeichnet, dass** die Verbindung der Formel (1) mehr als eine Alkoxysilylgruppe pro Hydroxylgruppe aufweist.

**8.** Verfahren nach zumindest einem der Ansprüche 1 bis 7, **dadurch gekennzeichnet, dass** die Emulsion optional gelöste Salze, feste oder flüssige Emulsionsstabilisatoren, partikuläre Emulgatoren und/oder Coemulgatoren enthält.

**9.** Verfahren nach zumindest einem der Ansprüche 1 bis 8, **dadurch gekennzeichnet, dass** die Emulsion weitere flüssige oder feste Additive ausgewählt aus der Gruppe umfassend organische Lösungsmittel, flüssige Siloxane, partikuläre Additive, Metalle, Metalllegierungen, Metalloxide, Mischoxide, Nitride, Carbide, Hydroxide, Carbonate oder Silikate, organische Partikel auf Basis von: Zellulose, Lignin, oxidiertem Polyethylen oder ausgehärtetem Epoxidharz, Siloxanharzen, und/oder Farbstoffe und/oder organische oder anorganische Pigmente enthält.

**10.** Verfahren nach zumindest einem der Ansprüche 4 bis 9, **dadurch gekennzeichnet, dass** die Alkoxysilylgruppen tragenden Alkoxylierungsprodukte im Gemisch mit weiteren monomeren oder polymergebundenen Alkoxysilanverbindungen verwendet werden.

**11.** Verfahren nach Anspruch 10, **dadurch gekennzeichnet, dass** im Gemisch monomere Alkoxysilane und/oder polymergebundene Silane der Formel (3) verwendet werden,

$$U_xSiV_{(4-x)} \quad (3)$$

wobei U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxygruppen und x = 1, 2, 3 oder 4 darstellen.

**12.** Partikel und/oder Kompositpartikel, hergestellt nach einem der Verfahren gemäß der Ansprüche 1 bis 11.

**13.** Verwendung der Partikel und/oder Kompositpartikel hergestellt nach zumindest einem der Verfahren der Ansprüche 1 bis 11 als Additiv für Klebstoffe, Beschichtungen, Reaktionsharzsystemen, Vergußmassen, Kunststoffe und Dichtstoffe zur Erhöhung der Schlagzähigkeit, als Additiv für kosmetische Produkte, zur Erzeugung eines angenehmen, samtigen Hautgefühls,
als Additiv zur Reduzierung von Rissbildung in Seifenkörpern und anderen festen Reinigungskörpern, als Additive zur Verbesserung der mechanischen Eigenschaften von Vulkanisaten und/oder Kautschukformkörpern,
als Beschichtungsmaterial für Textilien zur Reduzierung des Reibungswiderstandes,
als Kapselmaterial oder Trägermaterial für die Verkapselung festen oder flüssigen kosmetischen oder medizinischen oder pharmazeutischen Wirkstoffen, Katalysatoren oder Pestiziden,
als Material zur Verkapselung von Zusatzstoffen Vitaminen, Duftstoffen oder Geschmackstoffen,
als Material zur Herstellung von Kapsel-Toner für elektrophotografische und/oder Laserdruckverfahren.

Figur 1: Silylpolyether 1 der Formel (1)

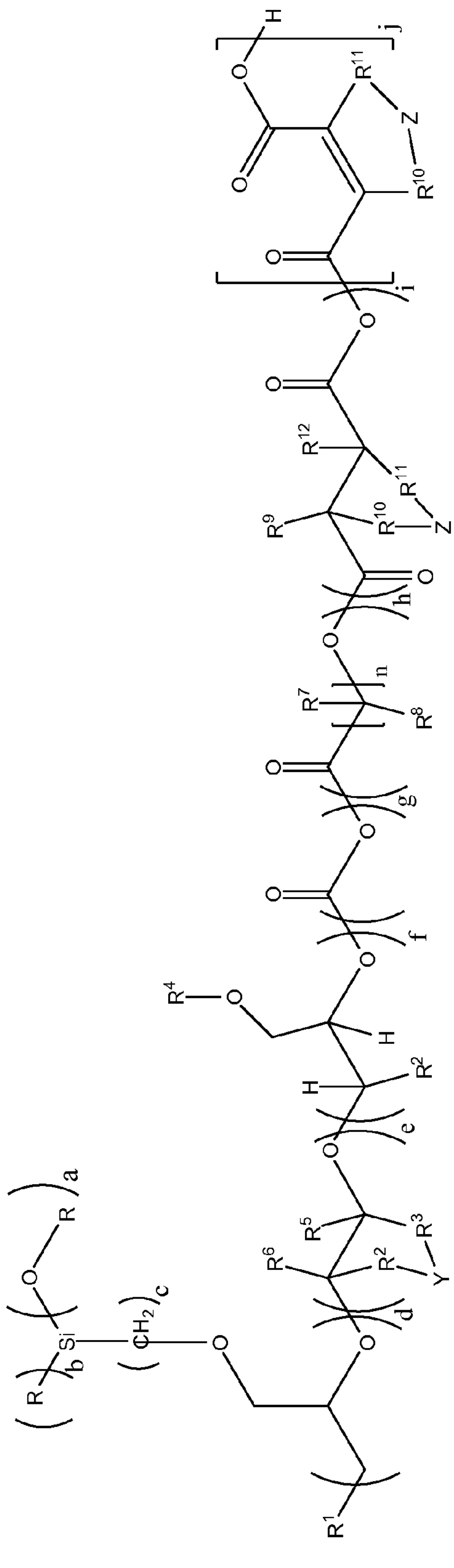

Figur 2:

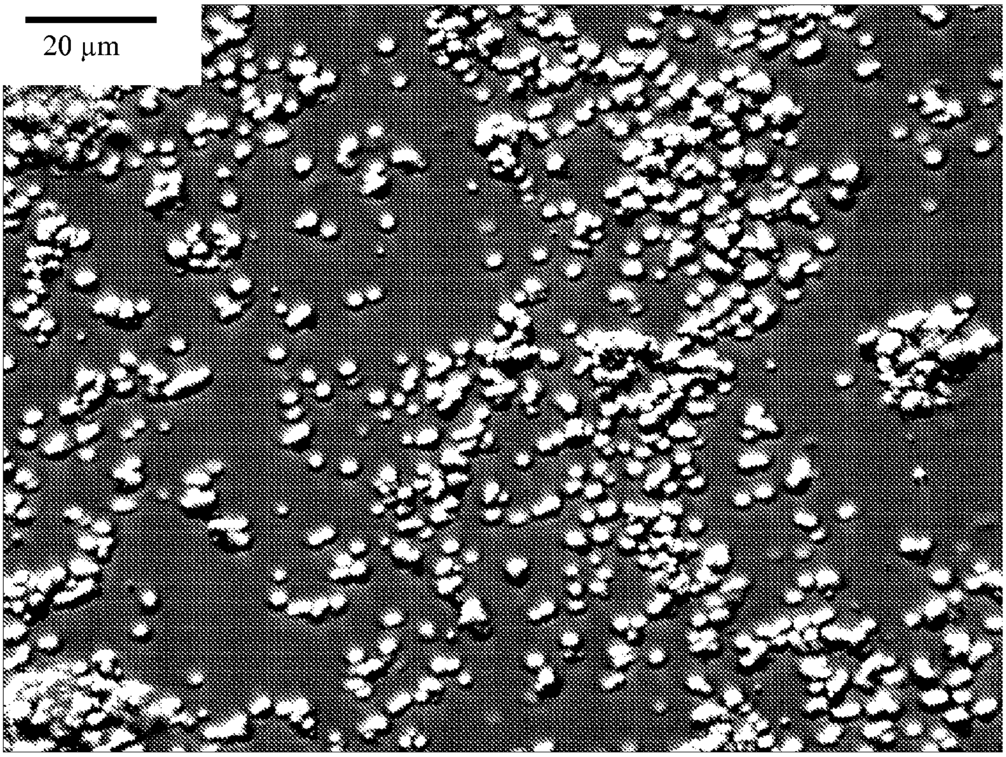


Figur 3:

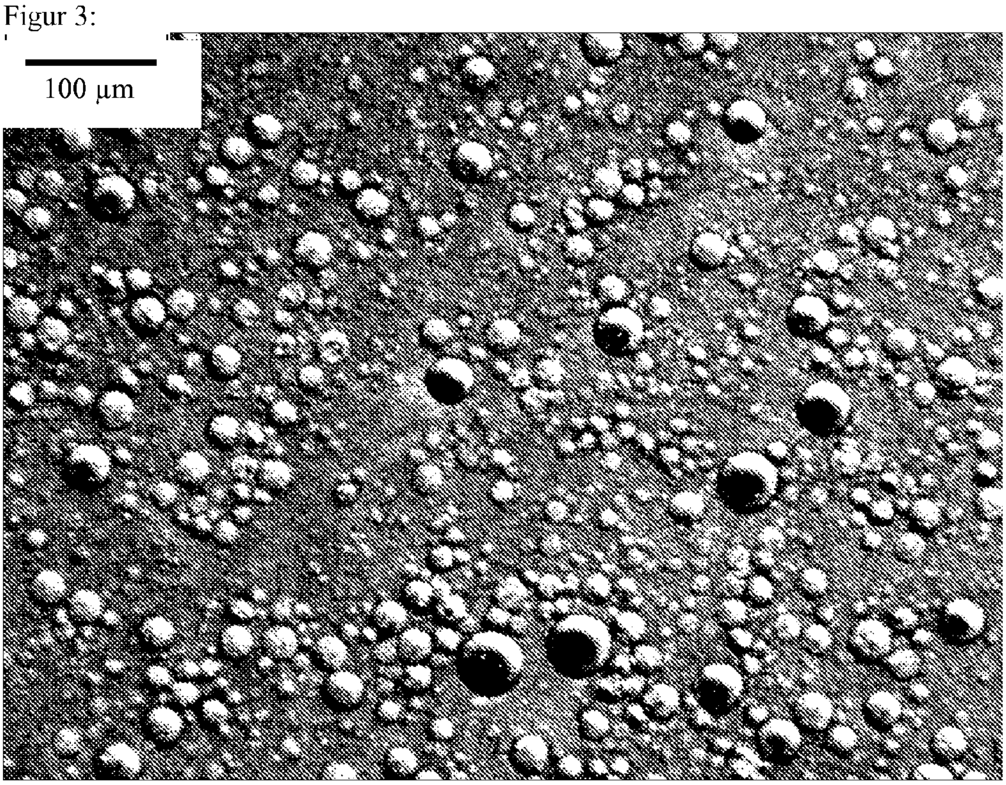

Europäisches Patentamt
European Patent Office
Office européen des brevets

# EUROPÄISCHER RECHERCHENBERICHT

Nummer der Anmeldung
EP 10 19 7246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 289 972 A1 (EVONIK GOLDSCHMIDT GMBH [DE]) 2. März 2011 (2011-03-02)<br>* Ansprüche 1-18 *<br>* Ansprüche 8-9 *<br>* Beispiele Paragraphen [0201]-[0231] *<br>----- | 1-13 | INV.<br>C08J3/00<br>C08G65/00 |
| X,P | WO 2010/136281 A1 (EVONIK GOLDSCHMIDT GMBH [DE]; SCHUBERT FRANK [DE]; EBBRECHT THOMAS [DE) 2. Dezember 2010 (2010-12-02)<br>* Ansprüche 1-14 *<br>* Seite 12, Zeile 20 folgende *<br>* Seite 38, Zeile 14 - Zeile 19 *<br>* Seite 42, Zeile 16 - Zeile 21 *<br>* Seite 43, Zeile 6 - Zeile 14 *<br>----- | 1-13 | |
| X,P | EP 2 194 086 A1 (EVONIK GOLDSCHMIDT GMBH [DE]) 9. Juni 2010 (2010-06-09)<br>* Ansprüche 1-15 *<br>* Beispiele 1-12 *<br>* insbesondere Beispiel 11 *<br>----- | 1-13 | |
| X,P | WO 2010/136279 A1 (EVONIK GOLDSCHMIDT GMBH [DE]; DE GANS BEREND-JAN [DE]; SCHUBERT FRANK) 2. Dezember 2010 (2010-12-02)<br>* Ansprüche 1-10 *<br>* insbesondere Anspruch 10 *<br>* Beispiele 1-5 *<br>* Seite 12, Zeile 16 - Seite 13, Zeile 15 *<br>* Seite 26, Zeile 24 - Seite 27, Zeile 15 *<br>----- | 1-13 | RECHERCHIERTE SACHGEBIETE (IPC)<br>C08J<br>C08G |
| X | EP 1 097 968 A1 (DOW CORNING [US]) 9. Mai 2001 (2001-05-09)<br>* Ansprüche 1,4,8 *<br>* Beispiele 1-5 *<br>-----<br>-/-- | 1-13 | |

Der vorliegende Recherchenbericht wurde für alle Patentansprüche erstellt

| Recherchenort | Abschlußdatum der Recherche | Prüfer |
|---|---|---|
| München | 18. März 2011 | Kositza, Matthias |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 19 7246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 074 575 A2 (DOW CORNING TORAY SILICONE [JP])<br>7. Februar 2001 (2001-02-07)<br>* Ansprüche 1,11,13,17 *<br>* Beispiel 1 *<br>* Absätze [0012], [0013], [0014], [0032], [0022], [0056] *<br>----- | 1-13 | |
| X | JP 11 255889 A (GE TOSHIBA SILICONE KK)<br>21. September 1999 (1999-09-21)<br>* Ansprüche 1-12 *<br>* Absätze [0009], [00014], [0015] *<br>* Absatz [0040] - Absatz [0044]; Tabelle 1 *<br>----- | 1-13 | |

RECHERCHIERTE SACHGEBIETE (IPC)

Der vorliegende Recherchenbericht wurde für alle Patentansprüche erstellt

2

| Recherchenort | Abschlußdatum der Recherche | Prüfer |
|---|---|---|
| München | 18. März 2011 | Kositza, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 19 7246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2011

| Im Recherchenbericht angeführtes Patentdokument | Datum der Veröffentlichung | Mitglied(er) der Patentfamilie | Datum der Veröffentlichung |
|---|---|---|---|
| EP 2289972 A1 | 02-03-2011 | CA 2713384 A1 | 19-02-2011 |
| | | DE 102009028640 A1 | 24-02-2011 |
| | | US 2011042004 A1 | 24-02-2011 |
| WO 2010136281 A1 | 02-12-2010 | DE 102009022627 A1 | 02-12-2010 |
| EP 2194086 A1 | 09-06-2010 | CA 2688022 A1 | 05-06-2010 |
| | | CN 101747836 A | 23-06-2010 |
| | | DE 102009022628 A1 | 10-06-2010 |
| | | JP 2010132903 A | 17-06-2010 |
| | | US 2010184913 A1 | 22-07-2010 |
| WO 2010136279 A1 | 02-12-2010 | DE 102009022630 A1 | 02-12-2010 |
| EP 1097968 A1 | 09-05-2001 | DE 60010409 D1 | 09-06-2004 |
| | | DE 60010409 T2 | 19-05-2005 |
| | | JP 2001187842 A | 10-07-2001 |
| | | US 6221979 B1 | 24-04-2001 |
| EP 1074575 A2 | 07-02-2001 | DE 60024177 D1 | 29-12-2005 |
| | | JP 2001040214 A | 13-02-2001 |
| | | US 6531542 B1 | 11-03-2003 |
| JP 11255889 A | 21-09-1999 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 11255889 A
- US 4761454 A
- JP 2003301047 B
- EP 1074575 A
- EP 1130046 A
- WO 2006016968 A
- JP 2003002973 B
- US 6753399 B
- EP 0765896 A
- EP 0744432 A
- US 20040156808 A
- DE 102004053314
- DE 102009022630
- DE 102004014704
- FR 2808704
- US 3615972 A
- DE 102007058713
- US 4946893 A
- EP 0319828 A
- US 5176960 A
- EP 0661334 A
- US 20060084758 A
- EP 0079322 A
- EP 5487624 A
- EP 0516057 A
- DE 102004047708
- DE 102004022406
- EP 0882105 A
- EP 0852610 A
- EP 0822232 A
- EP 0433727 A
- WO 2005100482 A
- EP 1967550 A1
- EP 1824904 A1
- US 7365145 B
- US 3627722 A
- US 3632557 A
- US 3971751 A


### In der Beschreibung aufgeführte Nicht-Patentliteratur


- **KATHARINA LANDFESTER ; UTE PAWELZIK ; MARKUS ANTONIETTI.** Polydimethyl siloxane latexes and copolymers by polymerization and polyaddition in miniemulsion. *Polymer,* 2005, vol. 46, 9892-9898
- **SPENCER UMFREVILLE PICKERING.** Emulsions. *Journal of the Chemical Society, Transactions,* 1907, vol. 91, 2001-2021
- **VON BERNHARD P. BINKS.** Particles as surfactants - similarities and differences. *Current opinion in colloid & interface science,* 2002, vol. 7, 21-41
- **HELEN HASSANDER ; BEATRICE JOHANSSON ; BERTIL TÖRNELL.** The mechanism of emulsion stabilization by small silica (LUDOX®) particles. *Colloids and Surfaces,* 1989, vol. 40, 93-105